# EUROPÄISCHE PATENTSCHRIFT

(11) **EP 4 384 580 B1**
(45) Veröffentlichungstag und Bekanntmachung des Hinweises auf die Patenterteilung: **25.03.2026**
(21) Anmeldenummer: 22800072.5
(22) Anmeldetag: 12.08.2022
(51) Int. Cl.: C09D 5/00

(54) **TRANSLUZENTE BESCHICHTUNGSSYSTEME, VERFAHREN ZUR HERSTELLUNG DER BESCHICHTUNGSSYSTEME SOWIE DEREN VERWENDUNG**
TRANSLUCENT COATING SYSTEMS, METHOD FOR PRODUCING THE COATING SYSTEMS, AND USE OF THE COATING SYSTEMS
SYSTÈMES DE REVÊTEMENT TRANSLUCIDES, PROCÉDÉ DE PRODUCTION DE SYSTÈMES DE REVÊTEMENT ET LEUR UTILISATION

(30) Priorität: 13.08.2021 DE 102021004169
(43) Veröffentlichungstag der Anmeldung: 19.06.2024
(73) Patentinhaber: Mankiewicz Gebr.&Co. (GmbH&CO. KG), 21107 Hamburg (DE)
(72) Erfinder: DE ROSSI, Umberto, 22844 Norderstedt (DE); PREISSING, Christian, 20535 Hamburg (DE); MOHWINKEL, Fabian, 22765 Hamburg (DE); URBANIAK, Anastasia, 21255 Tostedt (DE)
(86) Internationale Anmeldenummer: PCT/DE2022/100597
(87) Internationale Veröffentlichungsnummer: WO 2023/016608

(56) Entgegenhaltungen:
- EP-A1- 1 538 172
- WO-A1-2014/078514
- WO-A1-2017/160398
- WO-A1-2018/138253

## Beschreibung

Die Erfindung betrifft einen transluzenten, mehrschichtigen Aufbau zur Beschichtung von Oberflächen. Das erfindungsgemäße Beschichtungssystem ist insbesondere zur Anzeige und Bedienung von Schaltflächen auf der Oberfläche eines Substrats geeignet, das mit Hilfe einer Lichtquelle hinterleuchtet wird. Weiterhin betrifft die Erfindung Beschichtungstoffe und deren Zusammensetzungen zur Herstellung hinter- und durchleuchtbarer Beschichtungssysteme. Die erhaltenen Beschichtungssysteme sind insbesondere für Oberflächen mit integrierter Beleuchtung geeignet, wie sie beispielsweise in Displays oder Armaturenbrettern eingesetzt werden.

Beschichtungssysteme, die Primer-, Basecoat- und Clearcoatschichten aufweisen, sind bekannt. So werden beispielsweise in WO 2018/138253 A1 Basecoat-Clearcoat-Systeme zum Beschichten von Betonoberflächen mit einer Clearcoatschicht und mindestens einer Basecoatschicht beschrieben und in WO 2017/160398 A1 Beschichtungssysteme für Metallsubstrate mit einer Basecoat- und einer Clearcoatschicht, die mittels wet-on-wet-Verfahren appliziert und anschließend ausgehärtet werden. Durchleuchtbare Verkleidungsbauteile für Kraftfahrzeuge sind aus EP 3632749 A1 bekannt. Sie bestehen aus einem transluzenten oder transparenten Grundkörper auf dem eine Lackfolie angebracht ist, die in ausgewählten Bereichen Perforationen enthält. Durch diese kann Licht einer hinter oder unter dem Substrat angebrachten Lichtquelle strahlen. Die Lackfolie ist mit einer Klarlackschicht so versiegelt, dass die Perforationen nicht erkennbar sind. Bei der Hinterleuchtung wird ein Lichtschein in Größe und Form der perforierten Fläche erzeugt. Die Farbe des Lichts wird dabei durch die eingesetzte Lichtquelle festgelegt. Die Applikation von Folien ist auf unebenen Flächen wie beispielsweise auf gekrümmten oder strukturierten Oberflächen bekanntermaßen problematisch. Darüber hinaus haben Wärme und Feuchtigkeit einen schädlichen Einfluss auf die Haftung, so dass sich die Folien vom Substrat lösen können. Auch sind die üblicherweise eingesetzten Folien und Kunststoffe empfindlich gegenüber Kratzern.

Aufgabe der vorliegenden Erfindung ist es daher, verbesserte hinter- und durchleuchtbare Beschichtungssysteme zur Verfügung zu stellen, welche die bekannten Nachteile überwinden.

Die Aufgabe wird durch Verfahren zur Herstellung von Beschichtungssystemen gelöst, welche eine lasergravierbare Primerschicht, eine erste Clearcoatschicht, eine transluzente Basecoatschicht und eine zweite Clearcoatschicht aufweisen. Die Aufgabe wird weiterhin gelöst durch die Verwendung dieser Beschichtungssysteme zur Herstellung hinterleuchteter Bauteile.

Unter dem Begriff Beschichtungssystem wird im Folgenden eine Lackierung oder eine Beschichtungsaufbau verstanden, die oder der aus mehreren Schichten besteht. Die einzelnen Schichten werden dabei durch Applikation und Aushärtung von Beschichtungsstoffen aufgebracht. Unter dem Begriff Transluzenz wird im Folgenden die partielle Lichtdurchlässigkeit eines Körpers verstanden.

Die erfindungsgemäße Primerschicht weist ein oder mehrere Beschichtungen auf, welche durch Applikation und Aushärtung von geeigneten Beschichtungsstoffen auf einer Substratoberfläche erhalten werden. Als Primer werden sowohl Beschichtungstoffe als auch die daraus erhaltenen Beschichtungen bezeichnet, welche unmittelbar auf die Substratoberfläche aufgebracht werden bzw. sind und bestimmte Funktionen übernehmen, wie beispielsweise die Verbesserung der Haftung zwischen Substrat und Beschichtung.

Die erfindungsgemäß einsetzbaren Primer-Zusammensetzungen sind lichtundurchlässig und lasergravierbar. Die Lasergravur ist eine Graviertechnik, bei der Material durch einen auftreffenden Laserstrahl so stark erhitzt wird, dass es verdampft oder verbrennt. Um scharfe Konturen und klare, transparente Flächen in der Gravur zu erhalten, muss das Material rückstandsfrei verdampfen oder verbrennen.

Geeignet sind Primer-Beschichtungen auf der Basis von Polyurethan, welche aus zweikomponentigen Zusammensetzungen mit einer Polyol-Komponente als Bindemittel und einer Isocyanat-Komponente als Härter erhalten werden. Die erfindungsgemäß einsetzbaren Primer-Zusammensetzungen enthalten in der Bindemittelkomponente 10 bis 80 Gew.-% zumindest ein Polyol, 5 bis 30 Gew.-% zumindest ein Pigment sowie 3 bis 25 Gew.-% zumindest einen Füllstoff.

Geeignete Polyole sind die zur Herstellung von Polyurethanen üblichen und dem Fachmann geläufigen Polyole wie zum Beispiel Polyetherpolyole, Polycaprolactonpolyole, Polyesterpolyole, Polycarbonatpolyole, Polyacrylatpolyole, Polyole auf Basis dimerer Fettsäuren und deren Gemische. Bevorzugt sind Polycarbonatpolyole, Polyacrylatpolyole und deren Gemische.

Geeignete Pigmente sind die üblichen und dem Fachmann geläufigen anorganischen und organischen Pigmente wie zum Beispiel Ruß, Titandioxid, Eisenoxide, Perylenpigmente und deren Gemische. Bevorzugt ist der Einsatz von Ruß, Perylenpigmenten und deren Gemischen.

Geeignete Füllstoffe sind beispielsweise oxidische, carbonatische, sulfatische, silikatische Füllstoffe mit Alkali- oder Erdalkalikationen sowie Kationen der dritten und vierten Hauptgruppe des Periodensystems der Elemente als Gegenionen. Bevorzugt sind Bariumsulfat, Talkum, Kalziumcarbonat, Siliziumdioxid und deren Gemischen.

Weiterhin können die erfindungsgemäß einsetzbaren Primer-Bindemittelkomponenten zumindest ein Lösungsmittel enthalten, bevorzugt in Anteilen von 0,01 bis 82 Gew.-%. Geeignete Lösungsmittel sind die üblichen und dem Fachmann geläufigen Lösungsmittel wie zum Beispiel aliphatische Kohlenwasserstoffe, aromatische Kohlenwasserstoffe und deren Gemische. Bevorzugt sind Essigsäureester, aromatische Kohlenwasserstoffe wie zum Beispiel Xylole und deren Gemische. Besonders bevorzugt sind n-Butylacetat, Methoxypropylacetat, i-Butylacetat und deren Gemische.

Darüber hinaus können die erfindungsgemäß einsetzbaren Primer-Bindemittelkomponenten zumindest ein Additiv aufweisen, bevorzugt in Anteilen von 0,1 bis 20 Gew.-%. Geeignet sind die üblichen und dem Fachmann geläufigen Additive, insbesondere Netzmittel, Entschäumer, Verlaufsmittel und Haftvermittler.

Die erfindungsgemäß einsetzbaren Primer-Zusammensetzungen enthalten in der Härterkomponente zumindest ein Isocyanat. Geeignete Isocyanate sind die zur Herstellung von Polyurethan üblichen und dem Fachmann geläufigen Isocyanate wie zum Beispiel Oligomere oder Präpolymere auf Basis von Toluylendiisocyanat (TDI), Hexamethylendiisocyanat (HDI), Isophorondiisocyanat (IPDI), 4,4'-Diisocyanato-dicyclohexylmethan (HMDI), 1,6-Diisocyanatotrimethylhexan (TMDI) und deren Gemische. Bevorzugt sind aliphatische Isocyanate, insbesondere Oligomere auf der Basis von Hexamethylendiisocyanat (HDI).

Weiterhin können die Härterkomponenten zumindest ein Lösungsmittel enthalten, bevorzugt in Anteilen von 0,01 bis 70 Gew.-%. Geeignete Lösungsmittel sind die üblichen und dem Fachmann geläufigen Lösungsmittel wie zum Beispiel aliphatische Kohlenwasserstoffe, aromatische Kohlenwasserstoffe und deren Gemische. Bevorzugt sind Essigsäureester, aromatische Kohlenwasserstoffe und deren Gemische. Besonders bevorzugt sind Butylacetate, Xylole und deren Gemische.

Bindemittelkomponente und Härterkomponente der Primer-Zusammensetzung werden in einem molaren Verhältnis der OH-Gruppen des Bindemittels zu den NCO-Gruppen des Härters im Bereich von 1 : 0,5 bis 1 : 2, bevorzugt von 1 : 0,8 bis 1 : 1,3 besonders bevorzugt 1 : 0,9 bis 1 : 1,1, eingesetzt.

Die Primer-Zusammensetzungen sind hochgradig deckfähig. Sie können daher Schichten mit sehr geringen Trockenschichtdicken ausbilden, ohne dass die gewünschten Eigenschaften beeinträchtigt werden. Die erfindungsgemäßen Trockenschichtdicken liegen zwischen 2 und 40 µm, bevorzugt zwischen 2 und 20 µm, besonders bevorzugt zwischen 2 und 10 µm.

Zusätzlich weisen die erfindungsgemäß einsetzbaren Primer-Zusammensetzungen elektrisch leitfähige Partikel auf. Die erfindungsgemäß einsetzbaren Primer-Zusammensetzungen enthalten leitfähige Partikel in Mengen von 1 bis 40 Gew.-%, bevorzugt 10 bis 30 Gew.-%, besonders bevorzugt 15 bis 25 Gew.-%. Geeignete Substanzen sind leitfähiger Ruß, Silbernanodrähte, elektrisch leitfähige Polymere, Indiumzinnoxid, Silber, Indiumzinnoxid-dotierter Glimmer, leitfähiges Titandioxid, Graphen, Antimonzinnoxid, Antimonzinnoxid-dotierter Glimmer, Aluminium-dotiertes Zinnoxid und deren Gemische. Bevorzugt ist leitfähiger Ruß. Bevorzugt sind die leitfähigen Partikel in der Primer-Bindemittelkomponente enthalten.

Durch Zugabe der leitfähigen Partikel wird eine elektrisch leitfähige Primerschicht erhalten. Damit können durch eine Berührung der Oberfläche des Beschichtungssystems mit einem ebenfalls leitenden Material wie beispielsweise mit der Hand oder einem Finger, elektrische Signale erzeugt werden, die für Bedienungs- oder Schaltfunktion genutzt werden können.

Die erfindungsgemäß einsetzbare Basecoatschicht weist ein oder mehrere Beschichtungen auf, welche durch die Applikation und Aushärtung von geeigneten Beschichtungsstoffen erhalten werden. Unter dem Begriff Basecoat oder Basislack wird im Folgenden eine farbgebende Lackierung oder Beschichtung in einem Beschichtungssystem verstanden.

Geeignet sind Basecoat-Beschichtungen auf der Basis von Polyurethan, welche aus zweikomponentigen Zusammensetzungen mit einer Polyol-Komponente als Bindemittel und einer Isocyanat-Komponente als Härter erhalten werden. Die erfindungsgemäß einsetzbaren Basecoat-Zusammensetzungen enthalten in der Bindemittelkomponente 1 bis 90 Gew.-% zumindest ein Polyol, 0,1 bis 5 Gew.-% zumindest einen Katalysator, 0,5 bis 60 Gew.-% eines Gemisches enthaltend zumindest ein Pigment und zumindest einen Füllstoff, sowie 0,5 bis 50 Gew.-% zumindest ein Additiv. Geeignete Polyole sind die zur Herstellung von Polyurethanen üblichen und dem Fachmann geläufigen Polyole wie zum Beispiel Polyetherpolyole, Polycaprolactonpolyole, Polyesterpolyole, Polycarbonatpolyole, Polyacrylatpolyole, Polyole auf Basis dimerer Fettsäuren und deren Gemische. Bevorzugt sind Polycaprolactonpolyole, Polycarbonatpolyole, Polyesterpolyole und deren Gemische.

Geeignete Katalysatoren sind die für die Herstellung von Polyurethanen üblichen und dem Fachmann geläufigen Katalysatoren wie zum Beispiel Organometall-Komplexe mit Zinn, Zirkon, Titan oder Wismut als Zentralatom, tertiäre Amine und deren Gemische. Bevorzugt wird Dibutylzinndilaureat eingesetzt.

Geeignete Pigmente sind die üblichen und dem Fachmann geläufigen anorganischen und organischen Pigmente. Geeignete anorganische Pigmente sind beispielsweise Titandioxid, Eisenoxide, Chromoxide, Chromtitanate, Bismutvanadat, Cobaltblau, Ruße und deren Gemische. Geeignete organische Pigmente sind beispielsweise Pigment Yellow 151, Pigment Yellow 213, Pigment Yellow 83, Pigment Orange 67, Pigment Orange 62, Pigment Orange 36, Pigment Red 170, Pigment Violet 19, Pigment Violet 23, Pigment Blue 15:3, Pigment Blue 15:6, Pigment Green 7 und deren Gemische.

Geeignete Füllstoffe sind beispielsweise oxidische, carbonatische, sulfatische, silikatische Füllstoffe mit Alkali- oder Erdalkalikationen sowie Kationen der dritten und vierten Hauptgruppe des Periodensystems der Elemente als Gegenionen. Bevorzugt sind Bariumsulfat, Talkum, Kalziumcarbonat, Siliziumdioxid und deren Gemische.

Geeignete Additive sind beispielsweise Lichtschutzmittel, Dispergiermittel, Rheologieadditive, Entschäumer, Verlaufsmittel, Netzmittel und deren Gemische. Bevorzugt sind Lichtschutzmittel, Dispergiermittel, Rheologieadditive, Entschäumer und deren Gemische.

Weiterhin können die erfindungsgemäß einsetzbaren Basecoat-Bindemittelkomponenten zumindest ein Mattierungsmittel enthalten, bevorzugt in Anteilen von 0,1 bis 20 Gew.-%. Geeignete

Mattierungsmittel sind beispielsweise Silicate (Salze und Ester der Ortho-Kieselsäure und deren Kondensate), amorphe Kieselsäuren, Fällungskieselsäuren, mikronisierte Wachse wie Polyethylenwachse, Polypropylenwachse, Polyamidwachse, PTFE-Wachse, mikronisierte Polymere wie Harnstoffaldehydharze, Bienenwachse, Carnaubawachse und deren Gemische. Bevorzugt sind Silicate, Kieselsäuren, Polyethylenwachse, Polypropylenwachse, Polyamidwachse und deren Gemische.

Weiterhin können die erfindungsgemäß einsetzbaren Basecoat-Bindemittelkomponenten zumindest ein Lösungsmittel enthalten, bevorzugt in Anteilen von 1 bis 83 Gew.-%. Geeignete Lösungsmittel sind aromatische Kohlenwasserstoffe, aliphatische Kohlenwasserstoffe, Carbonsäureester, Ether und deren Gemische. Bevorzugt sind aromatische Kohlenwasserstoffe, Essigsäureester und deren Gemische. Besonders bevorzugt sind Xylol, Butylacetate und deren Gemische.

Die erfindungsgemäß einsetzbaren Basecoat-Zusammensetzungen enthalten in der Härterkomponente zumindest ein Isocyanat. Geeignete Isocyanate sind die zur Herstellung von Polyurethan üblichen und dem Fachmann geläufigen Isocyanate wie zum Beispiel Oligomere und Präpolymere auf Basis von Hexamethylendiisocyanat (HDI), Isophorondiisocyanat (IPDI), 4,4'-Diisocyanato-dicyclohexylmethan (HMDI), 1,6-Diisocyanatotrimethylhexan (TMDI) und deren Gemische. Bevorzugt sind Oligomere auf Basis von Hexamethylendiisocyanat (HDI) oder Isophorondiisocyanat (IPDI) und deren Gemische.

Weiterhinkönnen die Härterkomponenten zumindest ein Lösungsmittel enthalten, bevorzugt in Anteilen von 0,01 bis 50 Gew.-%. Geeignete Lösungsmittel sind die üblichen und dem Fachmann geläufigen Lösungsmittel wie zum Beispiel aliphatische Kohlenwasserstoffe, aromatische Kohlenwasserstoffe und deren Gemische.

Bindemittelkomponente und Härterkomponente der Basecoat-Zusammensetzung werden in einem molaren Verhältnis der OH-Gruppen des Bindemittels zu den NCO-Gruppen des Härters im Bereich von 1 : 0,5 bis 1 : 2, bevorzugt von 1 : 0,8 bis 1 : 1,3 besonders bevorzugt 1 : 0,9 bis 1 : 1,1, eingesetzt.

Die erfindungsgemäß einsetzbare Clearcoatschicht weist eine oder mehrere Beschichtungen auf, welche durch die Applikation und Aushärtung von geeigneten Beschichtungsstoffen erhalten werden. Unter dem Begriff Clearcoat oder Klarlack wird im Folgenden eine transparente Lackierung oder Beschichtung mit schützenden, dekorativen oder spezifischen technischen Eigenschaften verstanden.

Geeignet sind Clearcoat-Beschichtungen auf der Basis von Polyurethan, welche aus zweikomponentigen Zusammensetzungen mit einer Polyol-Komponente als Bindemittel und einer Isocyanat-Komponente als Härter erhalten werden. Die erfindungsgemäß einsetzbaren Clearcoat-Zusammensetzungen enthalten in der Bindemittelkomponente 20 bis 70 Gew.-% zumindest ein Polyol und 5 bis 30 Gew.-% zumindest ein Additiv.

Geeignete Polyole sind die zur Herstellung von Polyurethanen üblichen und dem Fachmann geläufigen Polyole wie zum Beispiel Polyetherpolyole, Polycaprolactonpolyole, Polyesterpolyole, Polycarbonatpolyole, Polyacrylatpolyole, Polyole auf Basis dimerer Fettsäuren und deren Gemische. Bevorzugt sind Polyesterpolyole.

Geeignete Additive sind die üblichen und dem Fachmann geläufigen Additive wie beispielsweise Lichtschutzmittel, Dispergiermittel, Rheologieadditive, Entschäumer, Verlaufsmittel, Netzmittel und deren Gemische.

Zusätzlich können die Clearcoat-Bindemittelkomponenten zumindest ein Mattierungsmittel aufweisen, bevorzugt in Anteilen von 8 bis 14 Gew.-%.

Geeignete Mattierungsmittel sind beispielsweise Silicate (Salze und Ester der Ortho-Kieselsäure und deren Kondensate), amorphe Kieselsäuren, Fällungskieselsäuren, mikronisierte Wachse wie Polyethylenwachse, Polypropylenwachse, Polyamidwachse, PTFE-Wachse, mikronisierte Polymere wie Harnstoffaldehydharze, Bienenwachse, Carnaubawachse und deren Gemische. Bevorzugt sind Silicate, Kieselsäuren, Polyethylenwachse, Polypropylenwachse, Polyamidwachse und deren Gemische.

Weiterhin können die erfindungsgemäß einsetzbaren Clearcoat-Bindemittelkomponenten zumindest ein Lösungsmittel enthalten, bevorzugt in Anteilen von 0,3 bis 75 Gew.-%. Geeignete Lösungsmittel sind aromatische Kohlenwasserstoffe, aliphatische Kohlenwasserstoffe, Carbonsäureester, Ether und deren Gemische. Bevorzugt sind aromatische Kohlenwasserstoffe, Essigsäureester und deren Gemische. Besonders bevorzugt sind Xylole, Butylacetate und deren Gemische.

Die erfindungsgemäß einsetzbaren Clearcoat-Zusammensetzungen enthalten in der Härterkomponente zumindest ein Isocyanat. Geeignete Isocyanate sind die zur Herstellung von Polyurethan üblichen und dem Fachmann geläufigen Isocyanate wie zum Beispiel Oligomere und Präpolymere auf Basis von Hexamethylendiisocyanat (HDI), Isophorondiisocyanat (IPDI), 4,4'-Diisocyanato-dicyclohexylmethan (HMDI), 1,6-Diisocyanatotrimethylhexan (TMDI) und deren Gemische. Bevorzugt sind Oligomere auf Basis von Hexamethylendiisocyanat (HDI) oder Isophorondiisocyanat (IPDI) und deren Gemische.

Weiterhin können die Härterkomponenten zumindest ein Lösungsmittel enthalten, bevorzugt in Anteilen von 0,01 bis 30 Gew.-%. Geeignete Lösungsmittel sind aromatische Kohlenwasserstoffe, aliphatische Kohlenwasserstoffe, Carbonsäureester, Ether und deren Gemische. Bevorzugt sind aromatische Kohlenwasserstoffe, Essigsäureester und deren Gemische. Besonders bevorzugt sind Xylole, Butylacetate und deren Gemische.

Bindemittelkomponente und Härterkomponente der Clearcoat-Zusammensetzung werden in einem molaren Verhältnis der OH-Gruppen des Bindemittels zu den NCO-Gruppen des Härters im Bereich von 1 : 0,5 bis 1 : 2, bevorzugt von 1 : 0,8 bis 1 : 1,3 besonders bevorzugt 1 : 0,9 bis 1 : 1,1, eingesetzt.

Das erfindungsgemäße Beschichtungssystem wird durch ein Verfahren hergestellt, welches zumindest die folgenden Schritte umfasst:
(a) Aufbringen von zumindest einer Primerbeschichtung auf einem transluzenten oder transparenten Substrat zur Herstellung einer lichtundurchlässigen Primerschicht,
(b) teilweises Entfernen der Primerschicht von der Substratoberfläche mittels Lasergravur,
(e) Aufbringen von zumindest einer Clearcoatbeschichtung auf der gravierten Primerschicht zur Herstellung einr ersten Clearcoatschicht,
(c) Aufbringen von zumindest einer transluzenten Basecoatbeschichtung auf der ersten Clearcoatschicht zur Herstellung der Basecoatschicht und
(5) Aufbringen von zumindest einer Clearcoatbeschichtung auf der Basecoatschicht zur Herstellung der zweiten Clearcoatschicht.

Bevorzugt werden in Schritt (3) Clearcoat-Zusammensetzungen eingesetzt, die Mattierungsmittel enthalten.

Die erfindungsgemäßen Beschichtungssysteme mit ihrer Kombination von Primer-, Basecoat- und Clearcoatschichten sind besonders gut zur Erzeugung glatter Oberflächen auf hinterleuchtbaren Bauteilen geeignet. Bei der Beleuchtung durch eine Lichtquelle, welche vom Betrachter ausgesehen hinter dem Bauteil angeordnet ist, leuchten nur die Abschnitte, in denen die lichtundurchlässige Primerschicht mittels Lasergravur entfernt wurde. Ohne Beleuchtung zeigen die erfindungsgemäß beschichteten Bauteile eine glatte, lackierte Oberfläche. Die erfindungsgemäßen Beschichtungen können im Unterschied zu den bisher eingesetzten Folien auch auf Bauteilen mit stark gewölbten Oberflächen und auf kleinteiligen Bauteilen wie zum Beispiel Bedienknöpfen oder Reglern eingesetzt werden. Durch den Einsatz einer elektrisch leitenden Primerschicht können diese Oberflächen zusätzlich Bedienungs- oder Schaltfunktionen erfüllen, da in den leuchtenden Abschnitten die Primerschicht mittels Lasergravur entfernt wurde.

Mit diesem Vier-Schichtaufbau des erfindungsgemäßen Beschichtungssystems werden sehr homogene und glatte Oberflächen erhalten, die vor allem für Lackierungen mit Hochglanz- und Metallic-Effekten geeignet sind. Es können hochglänzende Oberflächen und/oder Oberflächen mit Metallic-Effekt auf einem Bauteil erzeugt werden, die erst bei einer Hinterleuchtung verschiedenfarbige Flächenabschnitte zeigen. Auch diese Oberflächen können zusätzlich Bedienungs- oder Schaltfunktionen aufweisen.

Die erfindungsgemäßen Beschichtungssysteme sind besonders beständig gegenüber Feuchtigkeit, Chemikalien und mechanische Belastungen, so dass sie insbesondere für die Beschichtung von Bauteilen in Fahrzeugen, Flugzeugen und Schiffen geeignet sind, zum Beispiel für die Beschichtung von Außen- und Innenverkleidungen mit integrierter Beleuchtung.

Die erfindungsgemäßen Beschichtungssysteme sind zur Verwendung für hinterleuchtbare Bauteilen geeignet, die nur in ausgewählten Bereichen ihrer Oberfläche leuchten. In einer weiteren Ausführungsform weisen die leuchtenden Bereiche Bedienungs- oder Schaltfunktionen auf.

Die erfindungsgemäßen Beschichtungssysteme sind insbesondere zur Verwendung auf Automobil-Bauteilen im Außen- und Innenbereich geeignet, da sie die Anforderungen in Bezug auf Haftung, Alterung, Hydrolysebeständigkeit, Cremebeständigkeit, Chemikalienresistenz, Abriebverhalten, Kratzfestigkeit und Scheuerbeständigkeit erfüllen.

### Beispiele

### Zusammensetzungen der Beschichtungsstoffe

### Beispiel 1: lasergravierbarer Primer

| **Bestandteil** | **Anteil [Gew.-%]** |
|---|---|
| **Stammkomponente** | |
| Acrylatpolyol (OH-Zahl 6 bis 12 mg KOH/g) | 18 |
| Carbonatdiol (OH-Zahl 118 bis 132 mg KOH/g) | 3 |
| Gefälltes Bariumsulfat | 17 |
| Ruß | 16 |
| Oberflächenadditiv | 0,5 |
| Netzmittel | 14,5 |
| Butylacetat | 31 |

| **Härter** | |
|---|---|
| Aliphatisches Polyisocyanat (90%ig in Butylacetat und Solventnaphtha mit NCO-Anteil 19,6%) | 84 |
| Butylacetat | 10 |
| Xylol | 6 |

### Beispiel 2: leitfähiger, lasergravierfähiger Primer

| **Bestandteil** | **Anteil [Gew.-%]** |
|---|---|
| **Stammkomponente** | |
| Acrylatpolyol (OH-Zahl 6 bis 12 mg KOH/g) | 18 |
| Carbonatdiol (OH-Zahl 118 bis 132 mg KOH/g) | 3 |
| Gefälltes Bariumsulfat | 17 |
| Leitfähigkeitsruß | 16 |
| Oberflächenadditiv | 0,5 |
| Netzmittel | 14,5 |
| Butylacetat | 31 |

| **Härterkomponente** | |
|---|---|
| Aliphatisches Polyisocyanat (90%ig in Butylacetat und Solventnaphtha mit NCO-Anteil 19,6%) | 84 |
| Butylacetat | 10 |
| Xylol | 6 |

### Beispiel 3: Basislack

| **Bestandteil** | **Anteil [Gew.-%]** |
|---|---|
| **Stammkomponente** | |
| Hydroxylgruppenhaltiges Polyesterharz (OH-Zahl 185 bis 205 mg KOH/g) | 19 |
| Aliphatischer Polycarbonat-Polyester (OH-Zahl 56 mg KOH/g) | 8,5 |
| Gefälltes Bariumsulfat | 28 |
| Talkum | 4 |
| Pigment | 0,8 |
| Mattierungsmittel | 5,8 |
| Rheologie-Additive | 1,5 |
| Oberflächenadditiv | 3 |
| Netzmittel | 0,2 |
| Katalysator | 0,1 |
| Butylacetat | 17 |
| Xylol | 10,7 |
| Methoxypropylacetat | 0,1 |
| Butylglycol | 0,4 |
| Testbenzin | 0,4 |
| Propylancarbonat | 0,5 |

| **Härterkomponente** | |
|---|---|
| Aliphatisches Polyisocyanat (75%ig in Butylacetat mit NCO-Anteil 16,5%) | 100 |

### Beispiel 4: Clearcoat, glänzend

| **Bestandteil** | **Anteil [Gew.-%]** |
|---|---|
| **Stammkomponente** | |
| Acrylatpolyol (OH-Zahl 4 bis 9 mg KOH/g) | 20 |
| Acrylatpolyol (OH-Zahl 4 bis 8 mg KOH/g) | 10 |
| Acrylatpolyol (OH-Zahl 3 bis 5 mg KOH/g) | 20 |
| Hydroxylgruppenhaltiges Polyesterharz (OH-Zahl 5 bis 10 mg KOH/g) | 20 |
| Butylglykolacetat | 3,5 |
| Lichtschutzmittel | 1,5 |
| Oberflächenadditiv | 0,5 |
| Katalysator | 0,1 |
| Xylol | 13,4 |
| Solvent Naphtha | 11 |

| **Härterkomponente** | |
|---|---|
| Aliphatisches Polyisocyanat (90%ig in Butylacetat und Solventnaphtha mit NCO-Anteil 19,6%) | 84 |
| Butylacetat | 10 |
| Xylol | 6 |

### Beispiel 5: Clearcoat, matt

| **Bestandteil** | **Anteil [Gew.-%]** |
|---|---|
| **Stammkomponente** | |
| Hydroxylgruppenhaltiges Polyesterharz (OH-Zahl 50 bis 65 mg KOH/g) | 31,4 |
| Hydroxylgruppenhaltiges Polyesterharz (OH-Zahl 120 bis 140 mg KOH/g) | 5,4 |
| Hydroxylgruppenhaltiges Polyesterharz (OH-Zahl 280 mg KOH/g) | 6,4 |
| Mattierungsmittel | 11 |
| Rheologie-Additive | 0,4 |
| Oberflächenadditiv | 2,4 |
| Lichtschutzmittel | 0,8 |
| Katalysator | 0,1 |
| Butylacetat | 12,5 |
| Ethylacetat | 2,5 |
| Diacetonalkohol | 25,2 |
| Butylglycol | 0,6 |
| Xylol | 0,75 |
| Testbenzin | 0,5 |
| Methoxypropylacetat | 0,05 |

| **Härterkomponente** | |
|---|---|
| Aliphatisches Polyisocyanat (90%ig in Butylacetat und Solventnaphtha mit NCO-Anteil 19,6%) | 84 |
| Butylacetat | 10 |
| Xylol | 6 |

Die Herstellung von Beschichtungsstoffen aus den oben genannten Zusammensetzungen erfolgt nach den bekannten und dem Fachmann geläufigen Verfahren.

### Herstellung der Probekörper

### Probekörper 3 (Vierschicht-Aufbau):

Substrat: Polycarbonat Makrolon AG 2405
Erste Schicht: Laserprimer Beispiel 1, Pneumatische Applikation, Ofentrocknung bei 80 °C, Trockenschichtdicke 2 bis 6 µm
Zweite Schicht: Klarlack Beispiel 4, Applikationstechnik: Pneumatische Applikation, Ofentrocknung bei 80 °C, Trockenschichtdicke 40 bis 50 µm
Dritte Schicht: Basislack Beispiel 3, Pneumatische Applikation, Ofentrocknung bei 80 °C, Trockenschichtdicke 40 bis 50 µm
Vierte Schicht: Klarlack Beispiel 4, Pneumatische Applikation, Ofentrocknung bei 80 °C, Trockenschichtdicke 40 bis 50 µm

### Prüfmethoden:

### Bestimmung der Haftung (Gitterschnitt):

Auf der zu untersuchenden Beschichtung der Probekörper werden sechs parallele Schnitte mit einem Cuttermesser auf aufgebracht. Die Schnitte in die Beschichtung sind dabei so tief, dass sie bis auf die Substratoberfläche gehen, ohne diese zu verletzen. Anschließend werden sechs weitere parallele Schnitte angebracht, die senkrecht zu den ersten verlaufen und mit diesen ein gleichmäßige Quadrat oder Gitter bilden. Der Rasterabstand beträgt dabei 1 mm. Auf das entstandene Quadrat wird ein Klarschicht- oder Kreppbandstreifen mit einer Klebekraft von 8 bis 10 N/25mm aufgeklebt. Diese wird in einer Zeit von 0,5 bis 1 s in einem Winkel von 60° abgezogen. Dann wird das Gitter bzw. die Beschichtung visuell ausgewertet. Die Ergebnisse der Gitterschnitt-Prüfung werden visuell nach folgendem Schema beurteilt:

| | |
|---|---|
| Gt 0 | glatte Schnittränder, keine Abplatzungen |
| Gt 1 | bis zu 5% der Teilstücke sind abgeplatzt |
| Gt 2 | bis zu 15 % der Teilstücke sind abgeplatzt |
| Gt 3 | bis zu 35 % der Teilstücke sind abgeplatzt |
| Gt 4 | über 65 % der Teilstücke sind abgeplatzt |

Der Gitterschnittkennwert Gt 0 entspricht dabei einer sehr guten Haftfestigkeit, der Kennwert Gt 5 entspricht einer sehr schlechten Haftfestigkeit.

### Bestimmung der Kratzfestigkeit (Erichsen-Ritzhärte):

Es wird ein mit einem Gewicht belasteter Ritzstichel mit der Spitze auf die zu prüfende Beschichtung senkrecht aufgesetzt und auf der zu prüfenden Fläche stehend über die Fläche gezogen. Anschließend wird visuell beurteilt, ob die geprüfte Beschichtung eine Kratzspur aufweist. Die maximale Masse des Gewichtes mit dem der Ritzstichel belastet werden kann, ohne dass die Beschichtung bei der Prüfung verletzt wird, wird als Maß für die Kratzbeständigkeit der Beschichtung angegeben. Hierbei wird ein Erichsen-Härteprüfstab Typ 318 mit einer Prüfnadel nach Bosch, deren Gravierspitze einen Durchmesser von 0,75 mm aufweist, verwendet.

### Bestimmung der Hydrolysebeständigkeit:

Die beschichteten Probekörper werden 72 Stunden bei 90 °C +/- 2 °C und ≥ 93 % relativer Luftfeuchte im Klimaschrank gelagert. Danach werden sie 30 Minuten bei Raumtemperatur +18 °C bis +28 °C konditioniert und anschließend visuell bewertet. Nach weiteren 30 Minuten Konditionierung erfolgt eine Gitterschnittprüfung.

### Bestimmung der Cremebeständigkeit:

Auf die beschichtete Oberfläche der Probekörper wird eine Mullbinde gelegt, auf welche Prüfcreme(Prüfcremes A und B von Fa. Thierry GmbH, Stuttgart) aufgebracht werden. Die Creme wird durch die Mullbinde auf die Oberfläche gedrückt und verstrichen, so dass die Zwischenräume der Maschen mit der Creme gefüllt sind. Überschüssige Creme wird abgestrichen. Der so präparierte Probekörper wird in einem Umluftwärmeschrank 24 Stunden bei 80 °C gelagert. Danach wird die Mullbinde entfernt und die restliche Creme mit einem Tuch abgewischt, anschließend 4 Stunden bei Raumtemperatur (+18 °C bis +28 °C) konditioniert. Dann wird eine Gitterschnittprüfung durchgeführt.

### Bestimmung der Chemikalienbeständigkeit:

Auf die beschichtete Oberfläche der Probekörper werden nacheinander Tröpfchen von unterschiedlichen Chemikalienlösungen aufgebracht, wobei tensidisch-wässrige Lösung (handelsübliches Geschirrspülmittel), ammoniakalische alkoholische Reinigungslösung (handelsüblicher Glasreiniger), Ethanol vergällt mit 1 Gew.-% Methylethylketon und Reinigungsbenzin (Siedebereich 80-100°C) eingesetzt werden. Nach 10 minütigem Ablüften bei Raumtemperatur werden die Probekörper in einem Umluftofen für 30 Minuten bei 60°C erwärmt und anschließend 30 Minuten auf Raumtemperatur abgekühlt. Nach 24 Stunden Lagerung bei Raumtemperatur werden die Probekörper mit destilliertem Wasser gereinigt. Anschließend werden die Veränderungen in Farbe und Güte der Oberflächen visuell bewertet.

### Bestimmung der Leitfähigkeit (Schichtwiderstand):

Der Schichtwiderstand Rs wird mit Hilfe einer handelsüblichen Messsonde (Ken MR-1 der Firma Schütz Messtechnik) im 4-Punktmessverfahren bestimmt. Er wird üblicherweise in Ω/sq angegeben. Typische Werte des Schichtwiderstand von Touch-Panel-Oberflächen liegen im Bereich 10-1000 Ω/sq.

### Bestimmung der Transmission:

Eine Polycarbonatkunststoffplatte aus Makrolon 2405 wird mit dem zu prüfenden Beschichtungssystem beschichtet. Mit Hilfe eines handelsüblichen Spectrophotometers (CM.36dGV der Firma Konica Minolta) wird die Transmission des visuellen Lichts im Bereich 400 bis 700 nm bestimmt und über alle Wellenlängenbereiche gemittelt.

### Bestimmung der visuellen Kaschierung:

Unter der visuellen Kaschierung wird im Folgenden die Abdeckung der Bereiche der Lasergravuren der Beschichtung bzw. des Beschichtungssystems durch die darüber liegenden Schichten verstanden. Die beschichteten Probekörper werden ohne Hinterleuchtung untersucht. Die Oberfläche der Beschichtung wird im ersten Schritt bei Tageslicht bewertet. Im zweiten Schritt wird die Oberfläche mit einer Taschenlampe frontal angeleuchtet und die Erkennbarkeit der lasergravierten Bereiche visuell nach folgendem Schema beurteilt:
0 Sichtbarkeit der Gravuren bei Tageslicht sehr gut und haptisch mit dem Finger spürbar
1 Sichtbarkeit der Gravuren bei Tageslicht sehr gut, jedoch nicht haptisch mit dem Finger spürbar
2 Sichtbarkeit der Gravuren bei Tageslicht schwach sichtbar
3 keine Sichtbarkeit der Gravuren bei Tageslicht, nur beim Anleuchten mit der Taschenlampe
4 Keine Sichtbarkeit der Gravuren bei Tageslicht oder beim Anleuchten mit einer Taschenlampe

### Ergebnisse

Folgende Tabelle zeigt die erhaltenen Prüfergebnisse. Die erfindungsgemäßen Beschichtungssysteme weisen im Vergleich eine deutlich höhere Lichttransmission sowie eine bessere Kaschierung an den gravierten Abschnitten auf.

### Tabelle Prüfergebnisse

| **Probekörper** | **3** |
|---|---|
| Gitterschnitt | Gt 0 |
| Erichsen-Ritzhärte | 20 N |
| Hydrolyse-beständigkeit (Gitterschnitt) | Gt ≤ 1 |
| Cremebeständigkeit (Gitterschnitt) | Gt ≤ 1 |
| Chemikalien-beständigkeit (Oberfläche) | keine Änderung |
| Transmission | 10% |
| Leitfähigkeit | <1 |
| Kaschierungswert | 3 |

## Patentansprüche

1. Verfahren zur Herstellung eines transluzenten Beschichtungssystems aufweisend die Schritte
(a) Aufbringen von zumindest einer Primerbeschichtung auf einem transluzenten oder transparenten Substrat zur Herstellung einer lichtundurchlässigen Primerschicht,
(b) teilweises Entfernen der Primerschicht von der Substratoberfläche mittels Lasergravur,
(e) Aufbringen zumindest einer Clearcoatbeschichtung auf der gravierten Primerschicht zur Herstellung einer ersten Clearcoatschicht,
(c) Aufbringen von zumindest einer transluzenten Basecoatbeschichtung zur Herstellung einer Basecoatschicht und
(d) Aufbringen von zumindest einer weiteren Clearcoatbeschichtung zur Herstellung einer zweiten Clearcoatschicht.

2. Verfahren nach Anspruch 1, **dadurch gekennzeichnet, dass** die Primerschicht elektrisch leitfähig ist.

3. Verfahren nach Anspruch 1 oder 2, **dadurch gekennzeichnet, dass** die Primerbeschichtungen hergestellt sind aus Zusammensetzungen enthaltend eine Bindemittelkomponente aufweisend
10 bis 80 Gew.-% zumindest ein Polyol,
5 bis 30 Gew.-% zumindest ein Pigment,
2 bis 25 Gew.-% zumindest ein Füllstoff sowie eine Härterkomponente aufweisend zumindest ein Isocyanat.

4. Verfahren nach Anspruch 2, **dadurch gekennzeichnet, dass** die einsetzten Primer-Zusammensetzungen weiterhin 1 bis 40 Gew.-% leitfähige Partikel aufweisen.

5. Verfahren nach einem der voranstehenden Ansprüche,
**dadurch gekennzeichnet, dass dadurch gekennzeichnet**, das die Basecoatbeschichtungen hergestellt sind aus Zusammensetzungen enthaltend eine Bindemittelkomponente aufweisend
1 bis 90 Gew.-% zumindest ein Polyol,
0,5 bis 5 Gew.-% zumindest ein Katalysator,
0,5 bis 60 Gew.-% eines Gemisches enthaltend zumindest ein Pigment und zumindest einen Füllstoff,
0,5 bis 50 Gew.-% zumindest ein Additiv sowie eine Härterkomponente aufweisend zumindest ein Isocyanat.

6. Verfahren nach einem der voranstehenden Ansprüche, dadurchgekennzeichnet, dass die Clearcoatbeschichtungen hergestellt sind aus Zusammensetzungen enthaltend eine Bindemittelkomponente aufweisend
20 bis 70 Gew.-% zumindest ein Polyol,
5 bis 30 Gew.-% zumindest ein Additive sowie eine Härterkomponente aufweisend zumindest ein Isocyanat.

7. Verfahren nach Anspruch 6, **dadurch gekennzeichnet, dass** die eingesetzten Clearcoat-Zusammensetzungen weiterhin 8 bis 14 Gew.-% Mattierungsmittel aufweisen.

8. Verfahren nach Anspruch 7, **dadurch gekennzeichnet, dass** die Mattierungsmittel aufweisenden Clearcoat-Zusammensetzungen in Schritt (e) eingesetzt werden.

9. Verwendung des Beschichtungssystems hergestellt nach einem der Ansprüche 1 bis 8 für hinterleuchtbare Bauteile.

10. Verwendung des Beschichtungssystem nach Anspruch 9, **dadurch gekennzeichnet, dass** Bauteile eine Bedienungsfunktion aufweisen.

## Claims

1. Method for producing a translucent coating system, comprising the steps of
(a) applying at least one primer coating on a translucent or transparent substrate to produce a primer layer which is impermeable to light,
(b) the partial removal of the primer layer from the substrate surface by means of laser engraving,
(e) applying at least one clear coating on the engraved primer layer to produce a first clear coating layer,
(c) applying at least one translucent base coating to produce a base coat layer and
(d) applying at least one further clear coating to produce a second clear coating layer.

2. Procedure according to claim 1, **characterised in that** the primer layer is electrically conductive.

3. Procedure according claim 1 or 2, **characterised in that** the primer coatings are made of components including a binder component comprising
10 to 80 weight % of at least one polyol,
5 to 30 weight % of at least one pigment,
2 to 25 weight % of at least one filler as well as a hardener component comprising at least one isocyanate.

4. Procedure according to claim 2, **characterised in that** the applied primer compositions further contain 1 to 40 weight % of conductive particles.

5. Procedure according to one of the foregoing claims, **characterised in that** the base coat layers are made of compositions containing a binder component comprising 1 to 90 weight % of at least one polyol,
0.5 to 5 weight % of at least one catalyst,
0.5 to 60 weight % of a mixture containing at least one pigment and at least one filler,
0.5 to 50 weight % of at least one additive as well as one hardener component comprising at least one isocyanate.

6. Procedure according to one of the foregoing claims, **characterised in that** the base coat layers are made of compositions containing one binder component comprising
20 to 70 weight % of at least one polyol,
5 to 30 weight % of at least one additive as well as one hardener component comprising at least one isocyanate.

7. Procedure according to claim 6, **characterised in that** the clear coat compositions applied further comprise 8 to 14 weight % of mattifying agent.

8. Procedure according to claim 7, **characterised in that** the clear coat compositions comprising the matting agent are applied in step (e).

9. Use of the coating system made according to one of the claims 1 to 8 for backlit components.

10. Use of the system of coating layers according to claim 9, **characterised in that** the components have an operating function.

## Revendications

1. Procédé de réalisation d'un système de revêtement translucide présentant les étapes
(a) d'application d'au moins un revêtement de primaire sur un substrat translucide ou transparent aux fins de réalisation d'une couche de primaire opaque,
(b) d'enlèvement partiel de la couche de primaire de la surface du substrat par gravure au laser,
(e) d'application d'au moins un revêtement de vernis sur la couche de primaire gravée aux fins de réalisation d'une première couche de vernis,
(c) d'application d'au moins un revêtement de fond translucide aux fins de réalisation d'une couche de fond et
(c) d'application d'au moins un autre revêtement de vernis aux fins de réalisation d'une deuxième couche de vernis.

2. Procédé conforme à la revendication 1, **caractérisé en ce que** la couche de primaire est électriquement conductrice.

3. Procédé conforme à la revendication 1 ou 2, **caractérisé en ce que** les revêtements de primaire sont réalisés à partir de composés contenant une composante liant présentant
au moins un polyalcool à raison de 10 à 80 % en poids, au moins un pigment à raison de 5 à 30 % en poids,
au moins une matière de charge à raison de 2 à 25 % en poids,
ainsi qu'une composante durcisseur présentant au moins un isocyanate.

4. Procédé conforme à la revendication 2, **caractérisé en ce que** les composés mis en œuvre dans le primaire présentent toujours des particules conductrices à raison de 1 à 40 % en poids.

5. Procédé conforme à l'une des revendications précédentes, **caractérisé en ce que**
les revêtements de fond sont réalisés à partir de composés contenant une composante liant présentant au moins un polyalcool à raison de 1 à 90 % en poids,
au moins un catalyseur à raison de 0,5 à 5 % en poids,
un mélange contenant au moins un pigment et au moins une matière de charge à raison de 0,5 à 60 % en poids,
au moins un additif à raison de 0,5 à 50 % en poids,
ainsi qu'une composante durcisseur présentant au moins un isocyanate.

6. Procédé conforme à l'une des revendications précédentes, **caractérisé en ce que** les revêtements de vernis sont réalisés à partir de composés contenant une composante liant présentant
au moins un polyalcool à raison de 20 à 70 % en poids,
au moins un additif à raison de 5 à 30 % en poids,
ainsi qu'une composante durcisseur présentant au moins un isocyanate.

7. Procédé conforme à la revendication 6, **caractérisé en ce que** les composés mis en œuvre dans le vernis présentent toujours un agent de matage à raison de 8 à 14 % en poids.

8. Procédé conforme à la revendication 7, **caractérisé en ce que** les composés du vernis présentant un agent de matage sont mis en œuvre à l'étape (e).

9. Utilisation du système de revêtement réalisé conformément à l'une des revendications 1 à 8 pour des pièces rétroéclairables.

10. Utilisation du système de revêtement conformément à la revendication 9 **caractérisée en ce que** les pièces présentent une fonction de commande.
